# EUROPÄISCHE PATENTANMELDUNG

(11) **EP 1 056 038 A2**
(43) Veröffentlichungstag der Anmeldung: **29.11.2000**
(21) Anmeldenummer: 00111118.6
(22) Anmeldetag: 23.05.2000
(51) Int. Cl.: G06K 9/40

(54) **Verfahren zur Aufbereitung von aus Zeichen und Zeichenfolgen generierten Bitmustern für die optische Zeichenerkennung**

(30) Priorität: 28.05.1999 DE 19924570
(71) Anmelder: COMPUTER GESELLSCHAFT KONSTANZ MBH, 78467 Konstanz (DE)
(72) Erfinder: Hund, Martin, Dipl.Ing., 78476 Allensbach (DE)
(74) Vertreter: Schaumburg, Thoenes & Thurn

(57) **Zusammenfassung**

Zur Herausfilterung der Störsignale aus der Nutzinformation wird ein matrixartig aufgebautes Abtastfenster mit einer zur Zeilengröße vergleichsweise sehr geringen Spalten- und Zeilenzahl schrittweise über einen entsprechend großen Teilbereich des gespeicherten Bitmusters gelegt. Bei jeder Taktstellung des Bitmusters zur Abtastfenster wird für die Bildpunkte des Bitmusters, die längs der Randspalten und Randzeilen des Abtastfensters eine geschlossene Linie bilden, eine ODER-Verknüpfung durchgeführt. Ist das Ergebnis dieser Verknüpfung eine logische 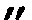 0̸",werden die innerhalb der geschlossenen Linie vorhandenen Störsignale entfernt bzw. gelöscht.

## Beschreibung

Die Erfindung betrifft ein Verfahren zur Aufbereitung von aus Zeichen und Zeichenfolgen generierten Bitmustern für die optische Zeichenerkennung nach den Merkmalen des Oberbegriffs der Ansprüche 1 bis 4.

Bei der optischen Erfassung von Belegen, Formularen oder ähnlichen Textvorlagen zum Zweck der automatischen Zeichenerkennung wird die mittels eines optoelektrischen Wandlers gewonnene Bitinformation in der Regel binarisiert. Dabei wird jeder Bildpunkt bzw. Pixel durch je ein einziges Bit entwedermit dem Binärwert logisch 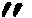 1" für das Zeichen oder mit dem Binärwert logisch 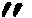 0̸" für den Zeichenhintergrund repräsentiert. Da bei den Textvorlagen unterschiedlichste Papierqualitäten oder auch Rasterdruck in Betracht gezogen werden müssen, kann bei der Binarisierung der Bildinformation nicht immer eindeutig zwischen dem Zeichenhintergrund und der eigentlichen Nutzinformation des Zeichens unterschieden werden. Das Ergebnis ist ein binarisiertes Bild, das neben der Nutzinformation auch Störpixel enthält, die durch schlechte Papierqualität, Schnutzpartikel und sonstige Flecke, sowie durch Rasterpunkte bei Druckvorlagen, verursacht werden. Diese Störpixel bzw. Flecke der unterschiedlichsten Größen und Formen beeinträchtigen zwangsläufig die Qualität und die Geschwindigkeit der automatischen Zeichenerkennung. Auch bei der Archivierung der binären Bilder wirken sich diese Störpixel bzw. Flecke störend aus, da zum Beispiel bei einer Lauflängenkompression, unter anderem bei der Fax-Datenübermittlung, unerwünscht große Datenmengen entstehen. Es ist deshalb wünschenswert, störende Bildpunkte bzw. Pixel vor der Zeichenerkennung oder Archivierung aus dem Bild elektronisch zu entfernen.

Der vorliegenden Erfindung liegt deshalb die Aufgabe zugrunde, für die Extrahierung und Beseitigung der in binarisierten Zeichenvorlagen enthaltenen Störpixel, einen möglichst einfachen und insbesondere mit geringem Zeitaufwand realisierbaren Lösungsweg aufzuzeigen.

Ausgehend von einem Verfahren der eingangs genannten Art wird diese Aufgabe durch die kennzeichnenden Merkmale des Anspruchs 1 bzw. des Anspruchs 2 gelöst. Für die Beseitigung von Störpixeln, die in unmittelbarer Nähe zur Nutzinformation stehen und zu sogenannten Verklebungen mit dem zu erkennenden Zeichen führen, ergibt sich die Lösung durch die kennzeichnenden Merkmale des Anspruchs 3 bzw. des Anspruchs 4.

Das erfindungsgemäße Verfahren zeichnet sich insbesondere dadurch aus, dass ohne Kenntnis der genauen Form und des Aussehens auf das Vorhandensein einer Störpixelinformation geschlossen werden kann. Dies bringt insbesondere bei Störungen, die in ihrer Ausdehnung größer als ein Pixel sind, eine Reduktion des Verarbeitungsaufwandes um mehrere Größenordnungen mit sich. Durch eine entsprechende Umsetzung in Hardware ergibt sich bei der heutigen Technologie (ASIC, FPGA, CPLD) eine leicht zu realisierende Lösung, die bei geringen Kosten gleichzeitig eine sehr hohe Verarbeitungsleistung ermöglicht. Bei Echtzeitverarbeitung ist eine Störbefreiung bis in den Bereich von 100 MPixel/s möglich.

Grundlage des erfindungsgemäßen Verfahrens ist die Erkenntnis, dass sich Flecke dadurch auszeichnen, dass um den Fleck herum eine zusammenhängende, geschlossene Linie gezogen werden kann, die, ohne den Fleck zu überdecken, eindeutig diesen Fleck von weiteren Flecken oder von der eigentlichen Nutzinformation trennt. Diese gedachte trennende Linie hat die Breite eines Bildpunkts bzw. Pixels. Die Anzahl der von der Linie eingeschlossenen Bildpunkte und die Geometrie des eingeschlossenen Bereichs bestimmen die Größe des Flecks, der entfernt werden kann.

Im Folgenden wird ein Ausführungsbeispiel der Erfindung anhand der Zeichnung näher erläutert. Dabei zeigen
- Figur 1: das Bitmuster für eine Textvorlage mit dazwischen eingelagerter Störinformation
- Figur 2: das Prinzip zur Ermittlung von Störpixeln mit Hilfe einer Suchmatrix.
- Figur 3: das Prinzip zur Ermittlung von mit der Nutzinformation verklebten Störpixeln

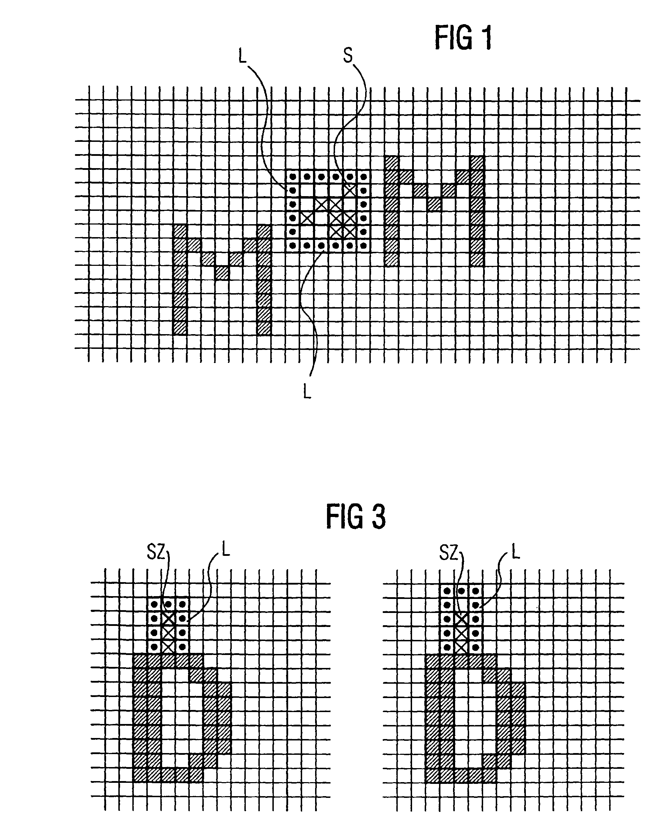

Die Figur 1 zeigt das aus einer Textvorlage generierte Bitmuster für zwei schräg versetzte Buchstaben 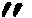 M" und einer dazwischen eingelagerten, mehrere Pixel umfassenden, Störinformation. Diese Störinformation ist von einem matrixartig aufgebauten Suchfenster, symbolisiert durch eine die Störpixel rahmnenartig umgrenzende geschlossene Linie L in der Form eines Quadrats mit jeweils sechs Bildpunkten pro Seitenkante. Diese geschlossene Linie L setzt sich aus insgesamt zwanzig, jeweils durch einen 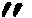 Punkt" markierten Bildpunkten zusammen und umschließt einen Bildpunktbereich mit insgesamt sechzehn Bildpunkten. Allein mit Hilfe dieser zwanzig Linien-Bildpunkte ist es nun möglich, die im geschlossenen Bereich vorhandenen, mit dem Symbol 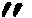 x" markierten Störpixel S als solche zu definieren, ohne eine genaue Kenntnis der Anordnung der einzelnen Störpixel zu haben. Durch die rahmenartige Eingrenzung des Störpixelbereichs werden insgesamt 2¹⁶⁻¹= 65.535 verschiedene Anordnungen von Störpixeln erfasst. Anstelle eines Vergleichs aller 65.535 Muster genügt hier also ein Vergleich mit nur zwanzig Linien-Bildpunkten, um eine eindeutige Aussage über den mit Störpixeln behafteten Bereich machen zu können. Für die praktische Anwendung ist es sinnvoll, dass die Form dieser Linien fest vorgegeben wird. Bei der Definition dieser Trennlinien sind jedoch keine speziellen Formen einzuhalten. Allen Linien muss aber gemeinsam sein, dass sie in ihrem Inneren eine Fläche komplett unschließen. Es ist durchaus zulässig, mehrere unterschiedliche Trennlinien gleichzeitig anzuwenden. Es genügt aber im Prinzip, wenn eine einzige Trennlinie verwendet wird, um festzustellen, dass sich im Innern ein beliebig geformter Fleck befindet. Dieser Fleck kann dann in einem weiteren Arbeitsschritt aus dem Bitmuster entfernt bzw. gelöscht werden.

Für die folgenden Erläuterungen sei vorausgesetzt, dass bei einem Binärbild ein schwarzer Bildpunkt als logisch 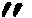 1", ein weisser Bildpunkt als logisch 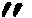 0̸" definiert ist. Ausgehend von dem für das Auffinden von Störpixelbereichen maßgeblichen Kriterium, wonach sich Störpixel innerhalb einer geschlossenen, störpixelfreien Linie befinden, kann nun eine Regel definiert werden, wonach die einzelnen Pixel der geschlossenen Linie über ein 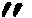 ODER"-Glied miteinander verknüpft werden. War diese Regel erfolgreich, ist also ein isolierter Fleck bzw. ein Störpixelbereich gefunden worden, so ist das Ergebenis der ODER-Verknüpfung eine logische 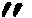 0̸", da auch alle Pixel der Linie selbst per Definition 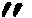 0̸" sein müssen. Liegt die Linie dagegen auf einem aktiven Bildpunkt mit dem Binärwert 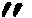 1", so ist auch das Ergebnis der Verknüpfung 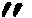 1". Die Ergebnisse der einzelnen Regeln werden dann einfach UND-verknüpft. War eine Suchregel erfolgreich, erhält man als Endergebnis aller logischen Verknüpfungen eine logische 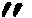 0̸".

Die Definition für schwarzer Bildpunkt = "1" und weißer Bildpunkt = 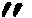 0̸" ist selbstverständlich nur eine Variante. Bei der umgekehrten Definition, also Weiß = "1" und Schwarz = 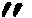 0̸", gilt bei Anwendung der Booleschen Algebra dann Folgendes: Eine Regel definiert die UND-Verknüpfung der auf einer Linie liegenden Bildpunkte. Liegt kein schwarzer Bildpunkt ( 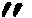 0̸") auf der Linie, so ist das Ergebnis der Verknüpfung eine "1". Die verschiedenen Regeln werden dann ODER-verknüpft. Ist das Ergebnis eine "1", dann ist auch das Endergebnis eine "1".

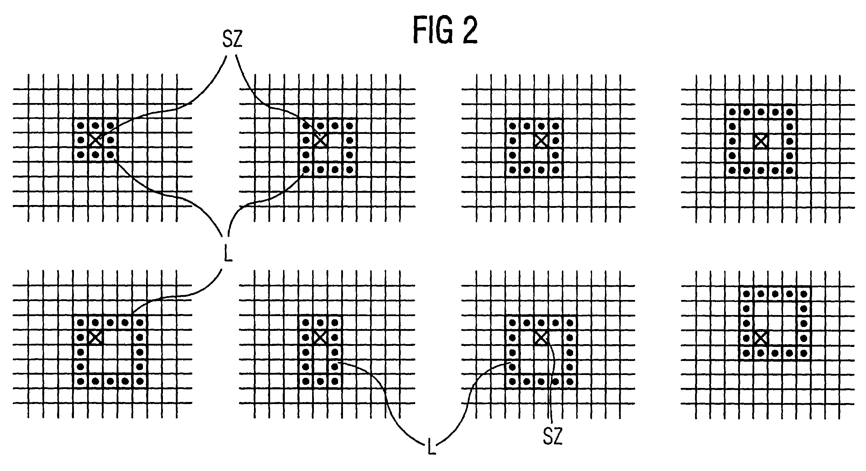

Die Realisierung dieses Prinzips ist dann besonders einfach, wenn zu einem Zeitpunkt jeweils nur über einen einzigen Bildpunkt zu entscheiden ist. Es soll deshalb nur bei einem Pixel, das im Folgenden als Zentralpixel SZ bezeichnet werden soll, die Entscheidung getroffen werden, ob es Bestandteil eines Flecks ist. Dazu wird dieses Zentralpixel in seinem matrixartigen Umfeld betrachtet, und zwar unter Verwendung eines durch die geschlossene Linie L gemäß Fig. 1 gebildeten Abtastfensters, das spalten- und zeilenweise jeweils im Pixelabstand verschoben werden kann. Die Figur 2 zeigt hierzu eine Reihe von Regeln, die für das Zentralpixel SZ definiert werden können. Wird die matrixförmige Umgebung um das Zentralpixel als ein großes flächiges Schieberegister realisiert, so wird bei jedem Schiebetakt zwar nur eine Entscheidung über das jeweils neue Zentralpixel getroffen, es können aber alle Regeln gleichzeitig abgefragt werden. Die Regeln selbst werden als feste ODER-Verknüpfung mit den entsprechenden Orten innerhalb der Matrix realisiert. Für die Durchführung dieser Maßnahme ist es lediglich erforderlich, dass das gesamte Bild in Zeilen- und Spaltenrichtung so verschoben wird, dass jeder Bildpunkt einmal zum Zentralpixel wird.

Für die folgenden Betrachtungen wird von einem Abtastfenster mit 8x8 Pixeln ausgegangen, und eine entsprechende Speichermatrix mit 8x8=64 Speicherzellen so aufgebaut, dass ein großes Schieberegistersysten entsteht. Bei jedem Takt übergeben die Speicherzellen jeweils ihren Inhalt an ihren linken Nachbarn. Die verschiedenen Regeln sind fest mit den entsprechenden Speicherzellen verknüpft. Die Matrix wird durch eine geeignete Hardware aus einem Zeilenzwischenspeicher so versorgt, dass aus einem Bild die ersten acht Zeilen nach und nach von rechts nach links durch die Speicherzellen geschoben werden. Nach jeder Verschiebeoperation wird die Verknüpfung der Regel neu ausgewertet. Ergibt die Verknüpfung, dass das Zentralpixel gelöscht werden soll, so wird es noch innerhalb der Suchmatrix gelöscht. Dies geschieht in der Weise, dass die komplette Zeile, in der sich das Zentralpixel befindet, nach der Verarbeitung wieder in den Zeilenzwischenspeicher geschrieben wird. Die Bearbeitung dieser zurückgeschriebenen Zeile ist hiermit abgeschlossen. Diese Zeile kann als bereinigte Zeile ausgegeben werden. Sind auf diese Art und Weise die ersten acht Zeilen durch die Matrix geschoben worden, werden in einem nächsten Schritt die zweite bis neunte Bildzeile gleichzeitig durch das Abtastfenster bzw. durch die Suchmatrix geschoben. Im nächsten Schritt erfolgt die gleiche Prozedur mit der dritten bis zehnten Zeile. Dieses Verfahren wird fortgesetzt, bis alle Bildzeilen einmal durch die Suchmatrix geschoben wurden. Da bei der Verarbeitung jeweils die korrigierte Information in den Zeilenzwischenspeicher zurückgeschrieben wird, lässt sich die Anzahl der notwendigen Regeln dadurch verringern, dass bei einer Regel auch die vorangegangenen Zeilen in die Auswertung eingeschlossen werden.

Es hat sich in Versuchen gezeigt, dass bei einer zulässigen Störfleckgröße von 4x4 Bildpunkten etwa zwölf bis fünzehn Regeln ausreichen, um alle auftretenden Flecke sicher herausfiltern zu können. Für die Umsetzung der einzelnen Regeln genügen etwa 250 ODER-Verknüpfungen. Dies bringt angesichts der vergleichsweise hohen Anzahl von 65.535 verschiedenen Fleckausprägungen in einem 4x4 Feld eine erhebliche Vereinfachung, insbesondere einen Zeitgewinn. Bei noch größeren Fleck- bzw. Störsignalbereichen ergibt sich ein noch größerer Gewinn.

Einen Sonderfall bilden solche Störpixel bzw. Störpixelbereiche oder Flecke, die nicht ausreichend isoliert von der Nutzinformation sind, sondern so nahe bei der Nutzinformation auftreten, dass bei der Binarisierung der Zeichenvorlage eine Verschmelzung oder Verklebung mit der Nutzinformation stattfindet. Ein typisches Beispiel für solche Effekte ist das Beschreiben von Papieren, die mit einem feinen Rasterdruck versehen sind, um für den menschlichen Betrachter einen grauen Hintergrund zu erzeugen. Sofern der Störbereich klein gegenüber der Strichstärke der Zeichen sind, kann durch eine modifizierte Anwendung der im Zusammenhang mit Figur 2 erläuterten Regeln erreicht werden, dass die Größe der störenden Verklebungen verringert wird. Dazu werden die Regeln, die bisher durch eine geschlossene Trennlinle definiert waren, gezielt an einem oder gegebenenfalls mehreren Punkten geöffnet.

Auf dem in Figur 3 dargestellten Bildpunktraster für den Buchstaben "D" ist oberhalb des Buchstabens ein mit einem 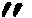 x" markierter Fleck in der Größe eines Pixels dargestellt, der bei der Binarisierung durch zwei darunterliegende zusätzliche Pixel mit der Nutzinformation des Buchstabens verklebt. Im linken Bild der Figur 3 ist eine Regel für die Trennlinie L dargestellt, die ohne die benachbarte Nutzinformation für den Buchstaben D den von der Trennlinie umrahmten Fleck beseitigen könnte. Da aber die per Definition geschlossene Trennlinie mindestens einen Bildpunkt der Nutzinformation an der Oberkante des Buchstaben 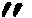 D" überdeckt, dürfte auf Grund der im Zusammenhang mit Figur 2 definierten Regel der eingeschlossene Bereich nicht entfernt werden. Im rechten Teil der Figur 3 wird deshalb eine modifizierte Regel dargestellt. Die Trennlinie ist hier an der der Nutzinformation zugewandten Rahmenkante offen. Es werden also nur die den beiden Randspalten und die der oberen Randzeile der Trennlinie L zugeordneten Pixel über ein ODER-Glied miteinander verknüpft. Wenn sich nun als Ergebnis dieser ODER-Verknüpfung, analog zu Fig. 1, ebenfalls eine logische 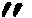 0̸" ergibt, dann sind auch hier die Voraussetzungen für die Entfernung der innerhalb der weitgehend geschlossenen Trennlinie auftretenden Störpixel erfüllt.

Das beschriebene Verfahren für die Rasterpunkt- und Fleckbefreiung ist primär für den Bereich binärer Bildinformation gedacht. Das erfindungsgemäße Verfahren ist jedoch so flexibel, dass eine Anwendung auch in anderen Farbräumen, zum Beispiel, Grau, RBG, HLS, CMYK, ..... denkbar ist. Eine Definition für den Hintergrund beim RGB-Farbraum könnte zum Beispiel sein, dass Bildpunkte, die zum Farbbereich Blau bis Violett gehören, immer zum Hintergrund gehören, und Bildpunkte Gelb bis Grün immer zum Vordergrund gehören. Definiert man jetzt entsprechend eine Regel, kann auch im RGB-Farbraum ein farbiger Fleck im farbigen Umfeld gelöscht werden. Das Löschen eines farbigen Flecks innerhalb einer Regel (Linie) könnte zum Beispiel durch das Ersetzen des eingeschlossenen Bereichs durch den Mittelwert der farbigen Pixel im direkten Umfeld ausserhalb der Regel erfolgen. Damit wäre ein universelles Verfahren definiert, das verrauschte Bilder von Störinformation bei definiertem Hintergrund befreien könnte. Die Anwendung eines solchen Verfahrens ist damit nicht auf den Bereich der optischen Zeichenerkennung beschränkt. Die zu korrigierenden Bilder müssen auch nicht zwingend mittels einer optoelektrischen Fotodiodenmatrix gewonnen werden. Das Verfahren ist ebenso auch bei synthetisch erzeugten und trotzdem verrauschten Bildern anwendbar.

## Patentansprüche

1. Verfahren zur Aufbereitung von aus Zeichen und Zeichenfolgen generierten Bitmustern für die optische Zeichenerkennung, bei dem die mittels einer optoelektrischen Fotodiodenmatrix abgetastete Zeichenvorlage in binarisierte Bildpunktsignale umgewandelt und in einem in Spalten und Zeilen unterteilten Bildsignalspeicher abgespeichert werden derart, dass die Nutzsignal-Bildpunkte und die im Zeichenhintergrund vorhandenen Störsignal-Bildpunke als binäre 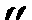 1" und die Bildpunkte des Zeichenhintergrundes als binäre 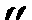 0̸" hinterlegt werden,
**dadurch gekennzeichnet**,
dass zur Herausfilterung der Störsignale aus der Nutzinformation ein matrixartig aufgebautes Abtastfenster mit einer zur Zeilengröße vergleichsweise sehr geringen Spalten- und Zeilenzahl schrittweise über einen entsprechend großen Teilbereich des gespeicherten Bitmusters gelegt und dieses Abtastfenster gegenüber dem Teilbereich taktweise sowohl in Spalten- als auch in Zeilenrichtung verschoben wird, dass bei jeder Taktstellung des Bitmusters zum Abtastfenster für die längs einer geschlossenen, durch die Randspalten und Randzeilen des Abtastfensters gebildeten Linie angeordneten Bildpunkte des Bitmusters eine ODER-Verknüpfung durchgeführt wird, und dass bei einem Verknüpfungsergebnis = 0̸ der innerhalb der Randzeilen und Randspalten liegende Bereich des Abtastfensters auf Bildpunkte mit dem Binärwert 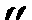 1" durchsucht wird und derartige Bildpunkte gelöscht bzw. mit dem Binärwert 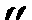 0̸" neu eingeschrieben werden.

2. Verfahren zur Aufbereitung von aus Zeichen und Zeichenfolgen generierten Bitmustern für die optische Zeichenerkennung, bei dem die mittels einer optoelektrischen Fotodiodenmatrix abgetastete Zeichenvorlage in binarisierte Bildpunktsignale umgewandelt und in einem in Spalten und Zeilen unterteilten Bildsignalspeicher abgespeichert werden derart, dass die Nutzsignal-Bildpunkte und die im Zeichenhintergrund vorhandenen Störsignal-Bildpunke als binäre 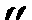 0̸" und die Bildpunkte des Zeichenhintergrundes als binäre 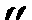 1" hinterlegt werden,
**dadurch gekennzeichnet**,
dass zur Herausfilterung der Störsignale aus der Nutzinformation ein matrixartig aufgebautes Abtastfenster mit einer zur Zeilengröße vergleichsweise sehr geringen Spalten- und Zeilenzahl schrittweise über einen entsprechend großen Teilbereich des gespeicherten Bitmusters gelegt und dieses Abtastfenster gegenüber dem Teilbereich taktweise sowohl in Spalten- als auch in Zeilenrichtung verschoben wird, dass bei jeder Taktstellung des Bitmusters zum Abtastfenster für die längs einer geschlossenen, durch die Randspalten und Randzeilen des Abtastfensters gebildeten Linie angeordneten Bildpunkte des Bitmusters eine UND-Verknüpfung durchgeführt wird, und dass bei einem Verknüpfungsergebnis = 1 der innerhalb der Randzeilen und Randspalten liegende Bereich des Abtastfensters auf Bildpunkte mit dem Binärwert 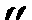 0̸" durchsucht wird und derartige Bildpunkte gelöscht bzw. mit dem Binärwert 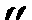 1" neu eingeschrieben werden.

3. Verfahren zur Aufbereitung von aus Zeichen und Zeichenfolgen generierten Bitmustern für die optische Zeichenerkennung, bei dem die mittels einer optoelektrischen Fotodiodenmatrix abgetastete Zeichenvorlage in binarisierte Bildpunktsignale umgewandelt und in einem in Spalten und Zeilen unterteilten Bildsignalspeicher abgespeichert werden derart, dass die Nutzsignal-Bildpunkte und die im Zeichenhintergrund vorhandenen Störsignal-Bildpunke als binäre 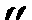 1" und die Bildpunkte des Zeichenhintergrundes als binäre 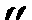 0̸" hinterlegt werden,
**dadurch gekennzeichnet**,
dass zur Herausfilterung von in unmittelbarer Nähe zur Nutzinformation auftretenden Störsignalen aus der Nutzinformation ein matrixartig aufgebautes Abtastfenster mit einer zur Zeichengröße vergleichsweise sehr geringen Spalten- und Zeilenzahl schrittweise über einen entsprechend großen Teilbereich des gespeicherten Bitmusters gelegt und dieses Abtastfenster gegenüber dem Teilbereich taktweise sowohl in Spalten- als auch in Zeilenrichtung verschoben wird, dass bei jeder Stellung des Abtastfensters für die längs einer geschlossenen, durch die Randspalten und Randzeilen des Abtastfensters gebildeten Linie zugeordneten Bildsignale des Bitmusters mit Ausnahme der dem Nutzinformationsbereich zugewandten Randspalte oder Randzeile eine ODER-Verknüpfung durchgeführt wird, und dass bei einem Verknüpfungsergebnis gleich 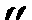 0̸" der innerhalb der verbleibenden Randzeilen und Randspalten liegende Bereich auf Bildsignale mit dem Binärwert 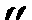 1" durchsucht wird und derartige Bildpunkte gelöscht bzw. mit dem Binärwert 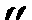 0̸" neu eingeschrieben werden.

4. Verfahren zur Aufbereitung von aus Zeichen und Zeichenfolgen generierten Bitmustern für die optische Zeichenerkennung, bei dem die mittels einer optoelektrischen Fotodiodenmatrix abgetastete Zeichenvorlage in binarisierte Bildpunktsignale umgewandelt und in einem in Spalten und Zeilen unterteilten Bildsignalspeicher abgespeichert werden derart, dass die Nutzsignal-Bildpunkte und die im Zeichenhintergrund vorhandenen Störsignal-Bildpunke als binäre 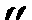 0̸" und die Bildpunkte des Zeichenhintergrundes als binäre 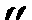 1" hinterlegt werden,
**dadurch gekennzeichnet**,
dass zur Herausfilterung von in unmittelbarer Nähe zur Nutzinformation auftretenden Störsignalen aus der Nutzinformation ein matrixartig aufgebautes Abtastfenster mit einer zur Zeichengröße vergleichsweise sehr geringen Spalten- und Zeilenzahl schrittweise über einen entsprechend großen Teilbereich des gespeicherten Bitmusters gelegt und dieses Abtastfenster gegenüber dem Teilbereich taktweise sowohl in Spalten- als auch in Zeilenrichtung verschoben wird, dass bei jeder Stellung des Abtastfensters für die längs einer geschlossenen, durch die Randspalten und Randzeilen des Abtastfensters gebildeten Linie zugeordneten Bildsignale des Bitmusters mit Ausnahme der dem Nutzinformationsbereich zugewandten Randspalte oder Randzeile eine UND-Verknüpfung durchgeführt wird, und dass bei einem Verknüpfungsergebnis gleich 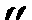 1" der innerhalb der verbleibenden Randzeilen und Randspalten liegende Bereich auf Bildsignale mit dem Binärwert 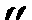 0̸" durchsucht wird und derartige Bildpunkte gelöscht bzw. mit dem Binärwert 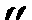 1" neu eingeschrieben werden.
